# EUROPEAN PATENT SPECIFICATION

(11) **EP 2 832 992 B1**
(45) Date of publication and mention of the grant of the patent: **13.12.2017**
(21) Application number: 13178485.2
(22) Date of filing: 30.07.2013
(51) Int. Cl.: F03D 80/60

(54) **Wind turbine comprising a cooling system**
Windturbine mit Kühlsystem
Éolienne comprenant un système de refroidissement

(43) Date of publication of application: 04.02.2015
(73) Proprietor: Siemens Aktiengesellschaft, 80333 München (DE)
(72) Inventor: Soerensen, Peter Hessellund, 8740 Brædstrup (DK)

(56) References cited:
- EP-A2- 2 302 214
- WO-A1-2010/069954
- CN-U- 201 908 789
- GR-B- 1 005 990
- US-A1- 2011 133 483

## Description

This invention discloses an arrangement and a method to cool the air in a nacelle of a wind turbine.

A wind turbine comprises one or more rotor blades that are connected to a hub. The hub is connected to the nacelle. The nacelle is rotatable arranged on top of a tower.

The wind interacts with the rotor blades and rotates the hub. The rotation of the hub is transferred to an electric generator to generate electricity.

In addition, the electric power is converted to the voltage and frequency needed to feed the energy into the grid.

Electrical and mechanical components like the generator, optionally a gear, electric cabinets for the converter, or the transformer are often arranged in the nacelle of the wind turbine.

The electrical and mechanical components produce waste heat. To avoid high temperatures that might damage the components in the nacelle, the heat needs to be removed from the nacelle.

It is known to cool the nacelle and the components in the nacelle by guiding ambient air, from outside of the wind turbine, through the nacelle.

This shows the disadvantage that dust, humidity, sand or - in the case of an off-shore wind turbine or a wind turbine close to the sea - salt enters the nacelle together with the ambient air.

It is also known to cool electrical equipment in the nacelle with a closed cooling circuit.

WO 01/06121 A1 describes a cooling system for a wind energy facility that has a fully or at least partially closed cooling circuit, whereby the heat to be dissipated from the cooling circuit is evacuated by means of the tower or the nacelle of the wind energy facility.

WO 2010/069954 A1 discloses a wind turbine comprising a tower with an interior enclosed by a tower wall which forms a heat exchange surface in an air cooling circuit wherein the tower interior forms a channel for guiding hot air along a flow path, wherein one or more air flow deflectors are arranged within the flow path for guiding the flow towards the tower wall.

CN 201908789 U discloses another example of a wind turbine where the air from the nacelle is guided through the tower.

This solution shows the disadvantage, that the nacelle is arranged rotatable on top of the tower and that the cooling fluid needs to be transferred from the nacelle to the tower through a rotatable connection.

It is the aim of the invention to provide a cooling system for the equipment in the nacelle of the wind turbine with an easy transfer of the cooling fluid from the nacelle to the tower.

The aim is reached by the subject matter according to the independent claims. Preferred embodiments of the invention are described in the dependent claims.

Disclosed is a wind turbine cooling system, whereby a wind turbine comprises a nacelle and a tower, and the nacelle is rotatable arranged on top of the tower. A component is arranged in the nacelle, and the component emits excess heat.

A first cooling system is coupled with the component in a way to cool the component in the nacelle.

The tower comprises a chamber that is arranged in the upper part of the tower directly below and in contact with the nacelle. The roof of the chamber is the bottom part of the nacelle and the roof of the chamber is rotatable together with the nacelle in respect to the tower.

The first cooling system is connected to the chamber through the roof of the chamber, so that the heat from the first cooling system is transferred to the air in the chamber. The chamber is cooled by a second cooling system. The chamber comprises a floor and a second cooling system comprises a connection between the chamber and the tower through the floor.

The connection is used to guide the warm air from the chamber into the tower so that the warm air flows along the wall of the tower and is cooled by the tower wall, so that the tower is used as a heat sink. The transportation of heat from the first cooling system to the tower is independent from the rotation or orientation of the nacelle in respect to the tower.

The nacelle is arranged rotatable on top of the tower. This rotation is known as the yaw movement of the nacelle. All cables and pipes connecting the nacelle to components in the tower need to be designed in a way to perform the yaw rotation of the nacelle of a wind turbine.

A component that emits excess heat is arranged in the nacelle. A component that emits excess heat can be at a generator of the wind turbine, a transformer, an electrical cabinet or a converter. To remove the excess heat, the heat is transferred into the tower and the tower is used as a heat sink. Therefore, a first cooling system is connected to the component.

The first cooling system may just force air as a cooling medium through the nacelle, the generator, the base-frame, or the shaft to cool a component present there. The first cooling system may also comprise tubes that guide a cooling fluid to the component to be cooled.

The tower comprises a chamber that is arranged in the upper part of the tower directly below and in direct contact with the nacelle. The floor of the chamber is a platform in the tower, in general the yaw platform. The wall of the chamber can be identical with the wall of the tower.

The roof of the chamber is build by the bottom part of the nacelle. Thus, the roof of the chamber rotates together with the nacelle, whereby the wall and the floor of the chamber are a part of the tower and do not rotate in respect to the tower.

The first cooling system is connected to the component in the nacelle to remove the heat from the component. The first cooling system transfers the heat from the component through the roof of the chamber into the chamber. Thus, the air in the chamber is heated up by the first cooling system.

The air in the chamber is cooled by a second cooling system that forces the air of the chamber down into the tower. The air in the tower flows along the tower and so also along the tower wall and transfers the thermal energy to the tower wall. The tower wall is then cooled by the wind or the ambient air around the tower.

The second cooling system comprises a connection between the chamber and the interior of the tower through the floor of the chamber. Thus, the heat of a component in the nacelle is transferred from the nacelle into the chamber and from the chamber into the tower.

The chamber is cooled by the second cooling system independently from the rotation or the orientation of the nacelle.

The first cooling system is connected to the component and to the roof of the chamber and rotates together with the roof of the chamber and the nacelle. Thus, the cooling of the chamber by the second cooling system can be performed independently from the rotation of the nacelle in respect to the tower.

Thus, the heat from the component can be transferred from the nacelle into the tower without the need of a pipe that performs the yaw movement of the nacelle. Thus, no rotatable connection of pipes for a cooling system is needed.

A rotatable connection in a pipe is normally subject to wear and tear in a wind turbine. A subject of wear and tear in the wind turbine needs a service and exchange on a regular basis.

No rotatable connection is needed to transfer the heat from the nacelle to the tower. Thus, the time and the money for service and the replacement of a rotatable connection are saved. Thus, the costs of the operation of the wind turbine are lowered and thus the costs of energy produced are reduced.

The tower of a wind turbine comprises a yaw platform the separates the upper part of the tower from the rest of the tower. The yaw platform is covered by the bottom part of the nacelle. The room between the yaw platform and the nacelle forms a chamber. This chamber can be used as the chamber to transfer the heat from the nacelle to the tower.

The chamber comprises a floor. A first opening to allow air from the chamber to flow into the tower and a second opening to allow cool air from the tower to flow into the chamber are arranged in the floor of the chamber.

Thus, the air from the chamber can be transferred into the interior of the tower and the air from the interior of the tower can be transferred into the chamber. Thus, the air from the chamber can flow into the tower and can there transfer the thermal energy to the tower wall. Thus, the tower can be used as a heat sink.

An air duct is connected to the first opening to guide the warm air from the chamber down into the tower, so that the air flows along the tower wall on the way up towards the chamber and cools at a tower wall.

Thus, the warm air is guided down into the tower through the air duct. At the end of the air duct, the warm air exits the air duct. From there, the warm air flows upward inside the tower. The air flows along the tower wall and transfers its thermal energy to the tower wall.

By using an air duct which guides the air down into the tower, the length of the way of the air along the tower wall can be increased. Thus, the efficiency of the cooling of the air can be increased. Thus, more thermal energy can be transferred to the tower wall. Thus, the cooling is optimized.

An air duct is connected to the second opening so that the warm air flows through the first opening into the tower, flows down along the power wall, and cools at the tower wall. The cool air in the tower is guided into the chamber through the air duct and a second opening.

The warm air from the chamber flows through the first opening into the interior of the tower. In the interior of the tower the air flowing along the tower wall transfers thermal energy to the tower wall and cools. A volume of cool air along the tower wall starts flowing downward inside the tower. Thus the cool air collects in the lower parts of the tower.

The cool air from the lower parts of the tower is guided upwards through an air duct and the opening and the floor of the chamber into the chamber. Thus, cool air from the lower parts of the tower is transferred into the chamber by the air duct.

A ventilator is arranged at one of the openings so that the air is moved through the tower. The exchange of air between the chamber and the tower can be increased by the use of a ventilator. The ventilator can be used to force air down into the tower or to suck air from the tower up into the chamber. Thus, the cooling effect of the tower used as a heat sink is increased.

The air duct is a pipe. The air duct is built as a pipe with a stiff outer wall. The stiff outer wall of a pipe provides a constant diameter of the pipe. Thus, the form of the pipe is not changed by the air flowing through the pipe and aerodynamic effects. Thus, the amount of air moving through the pipe is constant.

The pipe is more than 20 m long. Thus, the pipe is built to reach through at least one platform level in the tower. Thus, the way of the air inside the tower is prolonged. Thus, the cooling effect is increased.

The first cooling system comprises a heat exchanger that is arranged in the chamber to transfer the heat from the first cooling system to the air in the chamber.

The first cooling system transfers heat from the component through the nacelle into the chamber. Inside the chamber a heat exchanger is arranged at the roof of the chamber. Thus, the heat exchanger rotates together with the roof of the chamber and the nacelle of the wind turbine. Thus, the transfer of the heat from the first cooling system into the chamber is independent from the rotation of the nacelle.

By the use of a heat exchanger, the first cooling system is built as a cooling system with a closed cooling circuit. In the closed cooling circuit, air, water or oil can be used as a cooling medium.

The first cooling system transfers the heat from the component through the nacelle to the heat exchanger in a chamber. The heat exchanger rotates together with the nacelle. Thus, no rotatable connection is needed to transfer the cooling medium from the first cooling system to the heat exchanger.

A ventilator is arranged at the heat exchanger to transfer the heat from the first cooling system to the air in the chamber.

A ventilator is arranged at a heat exchanger to force the air in the chamber through or along the heat exchanger. Thus, the heat from the heat exchanger is transferred to the air in the chamber. By the use of a ventilator, a bigger amount of air is forced through or along the heat exchanger. Thus, the efficiency of the cooling system is increased.

Air is used as a cooling medium in the first cooling system. The air used as a cooling medium in the first cooling system can directly be exchanged with the air in the chamber. Thus, no heat exchanger is required. By the use of air as a cooling medium, no leakage problems can occur.

The first cooling system is connected to the chamber in a way that warm air from the first cooling system flows into the chamber through an opening in the roof of the chamber. And air from the chamber flows into the first cooling system of the nacelle through an opening in the roof of the chamber.

Thus, the air used as a cooling medium in the first cooling system is directly exchanged with the air in the chamber. Thus, no heat exchanger is required. Thus, the heat transfer between the first cooling system and the chamber is optimized.

The first cooling system comprises a ventilator so that air from the chamber is moved through the first cooling system. Thus, the exchange of air between the chamber and the first cooling system is increased. Thus, the cooling efficiency is increased.

The bottom of the chamber is the yaw platform of the tower. A tower of a wind turbine comprises a platform in the upper part of the tower that provides access to the yaw bearing for maintenance purpose. This yaw platform can be used as the bottom of the chamber of the cooling system. Thus, no additional platform has to be provided as a floor of the chamber.

A method is disclosed to cool a component in the nacelle of a wind turbine. A wind turbine comprises a nacelle and a tower, and the nacelle is rotatable arranged on top of the tower. A component is arranged in the nacelle and the component emits excess heat. A first cooling system is coupled with the component in a way to cool the component in the nacelle. The tower comprises a chamber that is arranged in the upper part of the tower directly below and in contact with the nacelle. The roof of the chamber is the bottom part of the nacelle and that the roof of the chamber is rotatable together with the nacelle in respect to the tower.

The method comprises the step of transferring the heat from the component in the nacelle into the chamber by a first cooling system. The method comprises that further step of cooling the air and the chamber by forcing the air into the tower where the air flows along the tower wall and transfers the heat to the tower wall.

The invention is shown in more detail by the help of figures. The figures show a preferred configuration and do not limit the scope of the invention.
- FIG 1: shows a wind turbine with a cooling system,
- FIG 2: shows a second embodiment of the cooling system,
- FIG 3: shows a third embodiment of the cooling system.

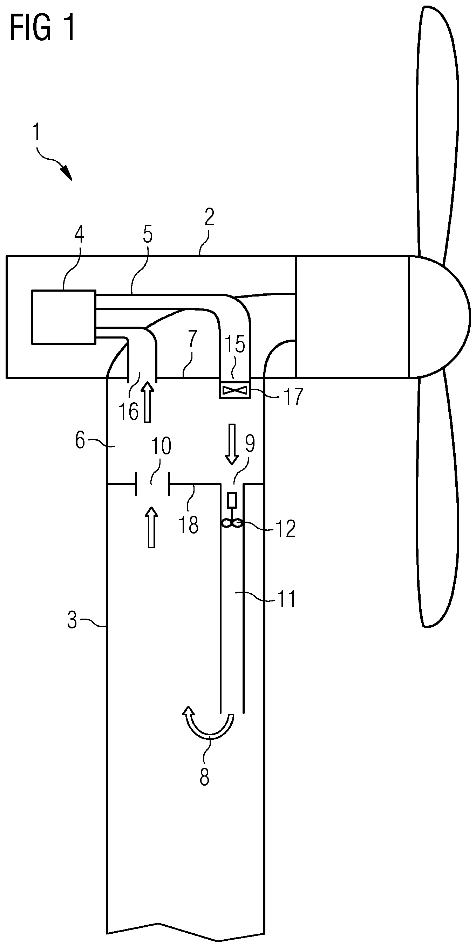

FIG 1 shows a wind turbine with a cooling system. FIG 1 shows a wind turbine 1 with a cooling system. The wind turbine comprises a nacelle 2 and a tower 3, whereby the nacelle 2 is arranged rotatable on top of the tower 3.

A component 4 is arranged in the nacelle 2, whereby the component 4 produces excess heat and needs to be cooled. The component 4 can either be the generator of the wind turbine or an electric cabinet, like a converter or a transformer.

The tower 3 comprises a chamber 6. The chamber 6 is arranged in the other part of the tower 3. The chamber 6 is in direct contact to the nacelle 2, whereby the roof 7 of the chamber 6 is the lower part of the nacelle 2. Thus, the roof 7 of the chamber 6 rotates together with the nacelle 2.

The floor 18 of the chamber 6 is a platform in the tower 3, preferably the yaw platform of the wind turbine 1.

A first cooling system 5 is connected to the component 4 in a way that it transfers the heat from the component 4 into the chamber 6.

The first cooling system 5 uses air as a cooling medium. The air flows through an opening 16 from the chamber 6 to the component 4. The air picks up the heat of the component and flows through a pipe and an opening 17 back into the chamber 6.

Thus, the heat of the component 4 is transferred to the chamber 6. A ventilator 15 is arranged at the opening 17 to move the air from the component 4 into the chamber 6.

The heat in the chamber 6 is removed by a second cooling system 8. The second cooling system 8 comprises an opening 9 in the floor 18 of the chamber 6.

A pipe 11 is connected as an air-duct to the opening 9. A ventilator 12 is arranged within the air duct. A ventilator 12 moves the warm air from the chamber 6 through the duct 11 into the tower 3. Preferably, the air duct 11 is more than 20 m long.

The warm air that exits the air duct 11 at a lower level in the tower 3, flows upwards inside the tower 3 and is cooled as it flows along the wall of the tower 3. The air enters the chamber 6 through an opening 10 in the floor 18 of the chamber 6.

Thus, the heat of the component 4 is transferred through the chamber 6 into the tower 3 and the tower 3 is used as a heat sink. In the tower 3, the heat of the warm air is transferred to the tower wall and the tower wall is cooled by the wind and the ambient air.

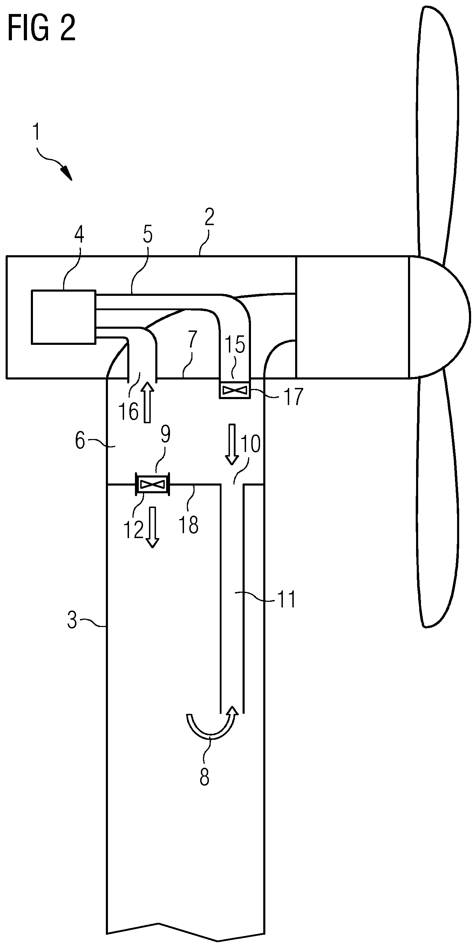

FIG 2 shows a second embodiment of the cooling system. FIG 2 shows a second embodiment of the cooling system in the wind turbine 1. The wind turbine 1 comprises a nacelle 2 that is arranged rotatable on top of a tower 3.

A component 4 is arranged in the nacelle 2. The component 4 can be a generator, a transformer, a converter or an electrical cabinet inside the nacelle 2. The component 4 produces excess heat that need to be cooled.

The first cooling system 5 is installed to cool the component 4. The tower 3 comprises a chamber 6, whereby the roof of the chamber is the lower part of the nacelle 2. Thus, the roof of the chamber 6 rotates together with the nacelle 2.

The floor 18 of the chamber 6 is a platform in the tower in general the yaw platform. The wall of the chamber 6 is built by the wall of the tower 3.

Air from the chamber is flowing through an opening 6 and the roof 7 of the chamber to the component 4 in the nacelle 2. The air removes the heat from the component 4 and flows through a tube and the opening 15 back into the chamber 6. A ventilator 17 is arranged at the opening 15 to move the air through the first cooling system.

The hot air in the chamber 6 is moved by a ventilator 12 through an opening 9 in the floor 18 of the chamber 6. The ventilator 12 forces the air from the chamber 6 into the lower part of the tower 3. On the way down into the tower, the air flows along the tower wall and transfers its thermal energy to the tower wall.

Further down in the tower 3, the air flows through a pipe 11, that is used as an air-duct, back through an opening 10 in the floor 18 of the chamber 6 into the chamber.

The ventilator 12, the pipe 11 and the openings 9 and 10 form a second cooling system 8. The second cooling system 8 transfers the warm air from the chamber 6 into the tower 3. The tower 3 is used as a heat sink for the warm air of the chamber 6. Thus, the air in the chamber 6 gets cooled by the second cooling system 8.

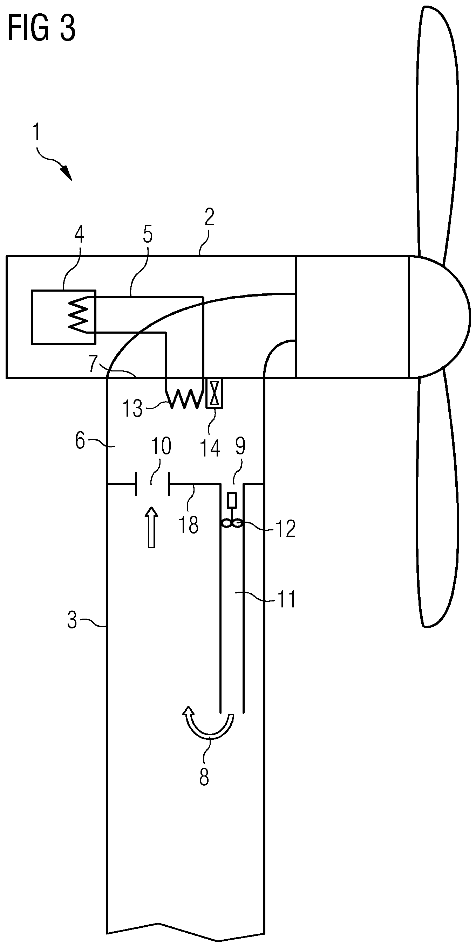

FIG 3 shows a third embodiment of the cooling system. FIG 3 shows a third embodiment of the cooling system of a wind turbine 1. The wind turbine 1 comprises a nacelle 2 and a tower 3, whereby the nacelle 2 is arranged rotatable on top of the tower 3.

A component 4 is arranged in the nacelle 2. The component 4 produces excess heat and needs to be cooled. A first cooling system 5 is connected to the component 4 to transfer the heat from the component 4 into the tower 3.

The tower 3 comprises a chamber 6 in the upper part of the tower, whereby the roof 7 of the chamber 6 is the lower part of the nacelle 2. Thus, the roof 7 of the chamber 6 rotates together with the nacelle 2. The wall of the chambers 6 is built by the wall of the tower 3.

The floor 18 of the chamber 6 is a platform in the tower, in general the yaw platform.

The first cooling system 5 comprises a heat exchanger 13 that transfers the heat from the component 4 into the chamber 6 in the tower 3.

A ventilator 14 is arranged to move the air along the heat exchanger 13 to transfer the heat from the first cooling system 5 to the air in the chamber 6. The air in the chamber 6 is cooled by a second cooling system 8.

The second cooling system 8 comprises an opening 9, a ventilator 12, a pipe 11, the tower 3, and an opening 10. The warm air of the chamber 6 is flowing through the opening 9 and through the pipe 11. A ventilator 12 is arranged within the pipe 11 to move the air from the chamber 6 through the pipe 11 into the tower 3.

The air that exits the pipe 11 flows upward inside the tower 3 and transfers its thermal energy to the tower wall. The tower wall is then cooled by the wind and the ambient air outside of the tower. Thus, the tower 3 is used as a heat sink in the second cooling system 8. The cool air from the tower moves through the opening 10 back into the chamber 6.

The first cooling system 5 is built as a closed cooling circuit. As a cooling fluid in the first cooling system 5 air, water or oil can be used.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. It should also be noted that reference signs in the claims should not be construed as limiting the scope of the claims.

## Claims

1. Wind turbine comprising a cooling system
- whereby a wind turbine (1) comprises a nacelle (2) and a tower (3), and the nacelle (2) is rotatable arranged on top of the tower (3),
- whereby a component (4) is arranged in the nacelle (2) and the component (4) emits excess heat and a first cooling system (5) is coupled with the component (4) in a way to cool the component (4) in the nacelle (2),
- whereby the tower (3) comprises a chamber (6) that is arranged in the upper part of the tower (3), directly below and in contact with the nacelle (2),
- whereby the roof (7) of the chamber (6) is the bottom part of the nacelle (2) and the roof (7) of the chamber (6) is rotatable together with the nacelle (2) in respect to the tower (3),
**characterized in that** the first cooling system (5) is connected to the chamber (6) through the roof (7) of the chamber (6), so that the heat from the first cooling system (5) is transferred to the air in the chamber (6),
- whereby the chamber (6) is cooled by a second cooling system (8),
- whereby the chamber (6) comprises a floor and the second cooling system (8) comprises a connection (9, 10) between the chamber (6) and the tower (3) through the floor, whereby a first opening (9) to allow air from the chamber (6) to flow into the tower (3) and a second opening (10) to allow cool air from the tower (3) to flow into the chamber (6) are arranged in the floor of the chamber, to guide the warm air from the chamber (6) into the tower (3), so that the warm air flows along the wall of the tower and is cooled by the tower wall, so that the tower (3) is used as a heat sink,
- so that transportation of heat from the first cooling system to the tower is independent from the rotation or orientation of the nacelle (2) in respect to the tower (3) .

2. Wind turbine according to claim 1, whereby an air duct (11) is connected to the first opening (9) to guide the warm air from the chamber down into the tower (3), so that the air flows along the tower wall on the way up towards the chamber and cools at the tower wall.

3. Wind turbine according to claim 1, whereby an air duct (11) is connected to the second opening (10), so that the warm air flows through the first opening (9) into the tower, flows down along the tower wall and cools at the tower wall, and that the cool air in the tower is guided into the chamber (6) through the air duct (11) and the second opening (10).

4. Wind turbine according to one of the claims 1 or 2, whereby a ventilator (12) is arranged at one of the openings (9, 10) so that the air is moved through the tower (3).

5. Wind turbine according to one of the claims 1 to 3, whereby the air duct (11) is a pipe.

6. Wind turbine according to claim 5, whereby the pipe is more than 20 meters long.

7. Wind turbine according to one of the preceding claims, whereby the first cooling system (5) comprises a heat exchanger (13) that is arranged in the chamber (6), to transfer the heat from the first cooling system (5) to the air in the chamber (6).

8. Wind turbine according to claim 7, whereby a ventilator (14) is arranged at the heat exchanger (13) to transfer the heat of the first cooling system to the air in the chamber(6).

9. Wind turbine according to one of the claims 1 to 4, whereby air is used as a cooling medium in the first cooling system (5).

10. Wind turbine according to claim 9, whereby the first cooling system (5) is connected to the chamber (6) in a way that warm air from the first cooling system (5) flows into the chamber (6) through an opening (15) in the roof (7) of the chamber (6) and air from the chamber (6) flows into the first cooling system (5) of the nacelle (2) through an opening (16) in the roof (7) of the chamber (6) .

11. Wind turbine according to one of the claims 9 or 10, whereby the first cooling system (5) comprises a ventilator (17), so that air from the chamber (6) is moved through the first cooling system (5).

12. Wind turbine according to one of the preceding claims, whereby the bottom of the chamber (6) is the yaw platform (18) of the tower (2).

13. Method to cool a component (4) in the nacelle (2) of a wind turbine (1),
- whereby a wind turbine (1) comprises a nacelle (2) and a tower (3), and the nacelle (2) is rotatable arranged on top of the tower (3),
- whereby a component (4) is arranged in the nacelle (2) and the component (4) emits excess heat and a first cooling system (5) is coupled with the component (4) in a way to cool the component (4) in the nacelle (2),
- whereby the tower (3) comprises a chamber (6) that is arranged in the upper part of the tower (3), directly below and in contact with the nacelle (2), so that the roof (7) of the chamber (6) is the bottom part of the nacelle (2) and that the roof (7) of the chamber (6) is rotatable together with the nacelle (2) in respect to the tower (3),
comprising the steps of
- transferring the heat from the component (4) in the nacelle (2) into the chamber (6) by a first cooling system (5),
- cooling the air in the chamber (6) by forcing the air into the tower (3), whereby a first opening (9) to allow air from the chamber (6) to flow into the tower (3) and a second opening (10) to allow cool air from the tower (3) to flow into the chamber (6) are arranged in the floor of the chamber, where the air flows along the tower wall and transfers the heat to the tower wall.

## Patentansprüche

1. Windenergieanlage mit einem Kühlsystem,
- wobei eine Windenergieanlage (1) eine Gondel (2) und einen Turm (3) umfasst und die Gondel (2) drehbar oben auf dem Turm (3) angeordnet ist,
- wobei eine Komponente (4) in der Gondel (2) angeordnet ist und überschüssige Wärme abgibt und ein erstes Kühlsystem (5) so mit der Komponente (4) gekoppelt ist, dass es die Komponente (4) in der Gondel (2) kühlt,
- wobei der Turm (3) eine Kammer (6) umfasst, die in dem oberen Teil des Turms (3) direkt unterhalb und in Kontakt mit der Gondel (2) angeordnet ist,
- wobei es sich bei dem Dach (7) der Kammer (6) um den unteren Teil der Gondel (2) handelt und das Dach (7) der Kammer (6) zusammen mit der Gondel (2) in Bezug auf den Turm (3) drehbar ist,
**dadurch gekennzeichnet, dass** das erste Kühlsystem (5) über das Dach (7) der Kammer (6) mit der Kammer (6) verbunden ist, so dass die Wärme aus dem ersten Kühlsystem (5) auf die Luft in der Kammer (6) übertragen wird,
- wobei die Kammer (6) über ein zweites Kühlsystem (8) gekühlt wird,
- wobei die Kammer (6) einen Boden und das zweite Kühlsystem (8) über den Boden eine Verbindung (9, 10) zwischen der Kammer (6) und dem Turm (3) umfasst, wobei eine erste Öffnung (9), die Luft aus der Kammer (6) in den Turm (3) hineinströmen lässt, und eine zweite Öffnung (10), die kühle Luft aus dem Turm (3) in die Kammer (6) hineinströmen lässt, in dem Boden der Kammer angeordnet sind und so die warme Luft aus der Kammer (6) in den Turm (3) geleitet wird, so dass die warme Luft an der Wand des Turms entlangströmt und von der Turmwand gekühlt wird, so dass der Turm (3) als Kühlkörper benutzt wird,
- so dass der Transport von Wärme aus dem ersten Kühlsystem zum Turm von der Drehung oder Ausrichtung der Gondel (2) in Bezug zum Turm (3) unabhängig ist.

2. Windenergieanlage nach Anspruch 1, wobei ein Luftkanal (11) mit der ersten Öffnung (9) verbunden ist und die warme Luft aus der Kammer in den Turm (3) hinunterleitet, so dass die Luft auf dem Weg hinauf zur Kammer an der Turmwand entlangströmt und sich an der Turmwand abkühlt.

3. Windenergieanlage nach Anspruch 1, wobei ein Luftkanal (11) mit der zweiten Öffnung (10) verbunden ist, so dass die warme Luft durch die erste Öffnung (9) in den Turm strömt, an der Turmwand entlang nach unten strömt und sich an der Turmwand abkühlt und die kühle Luft im Turm über den Luftkanal (11) und die zweite Öffnung (10) in die Kammer (6) geleitet wird.

4. Windenergieanlage nach einem der Ansprüche 1 und 2, wobei ein Ventilator (12) so an einer der Öffnungen (9, 10) angeordnet ist, dass die Luft durch den Turm (3) bewegt wird.

5. Windenergieanlage nach einem der Ansprüche 1 bis 3, wobei es sich bei dem Luftkanal (11) um ein Rohr handelt.

6. Windenergieanlage nach Anspruch 5, wobei das Rohr mehr als 20 Meter lang ist.

7. Windenergieanlage nach einem der vorhergehenden Ansprüche, wobei das erste Kühlsystem (5) einen in der Kammer (6) angeordneten Wärmetauscher (13) zum Übertragen der Wärme aus dem ersten Kühlsystem (5) auf die Luft in der Kammer (6) umfasst.

8. Windenergieanlage nach Anspruch 7, wobei ein Ventilator (14) zum Übertragen der Wärme des ersten Kühlsystems auf die Luft in der Kammer (6) an dem Wärmetauscher (13) angeordnet ist.

9. Windenergieanlage nach einem der Ansprüche 1 bis 4, wobei in dem ersten Kühlsystem (5) Luft als Kühlmedium benutzt wird.

10. Windenergieanlage nach Anspruch 9, wobei das erste Kühlsystem (5) so mit der Kammer (6) verbunden ist, dass warme Luft aus dem ersten Kühlsystem (5) durch eine Öffnung (15) in dem Dach (7) der Kammer (6) in die Kammer (6) und Luft aus der Kammer (6) durch eine Öffnung (16) in dem Dach (7) der Kammer (6) in das erste Kühlsystem (5) der Gondel (2) strömt.

11. Windenergieanlage nach einem der Ansprüche 9 und 10, wobei das erste Kühlsystem (5) einen Ventilator (17) umfasst, so dass Luft aus der Kammer (6) durch das erste Kühlsystem (5) bewegt wird.

12. Windenergieanlage nach einem der vorhergehenden Ansprüche, wobei der Boden der Kammer (6) die Nachführplattform (18) des Turms (2) ist.

13. Verfahren zum Kühlen einer Komponente (4) in der Gondel (2) einer Windenergieanlage (1),
- wobei eine Windenergieanlage (1) eine Gondel (2) und einen Turm (3) umfasst und die Gondel (2) drehbar oben auf dem Turm (3) angeordnet ist,
- wobei eine Komponente (4) in der Gondel (2) angeordnet ist und überschüssige Wärme abgibt und ein erstes Kühlsystem (5) so mit der Komponente (4) gekoppelt ist, dass es die Komponente (4) in der Gondel (2) kühlt,
- wobei der Turm (3) eine Kammer (6) umfasst, die in dem oberen Teil des Turms (3) direkt unterhalb und in Kontakt mit der Gondel (2) angeordnet ist, so dass es sich bei dem Dach (7) der Kammer (6) um den unteren Teil der Gondel (2) handelt und das Dach (7) der Kammer (6) zusammen mit der Gondel (2) in Bezug auf den Turm (3) drehbar ist,
mit folgenden Schritten:
- Übertragen der Wärme von der Komponente (4) in der Gondel (2) in die Kammer (6) über ein erstes Kühlsystem (5),
- Kühlen der Luft in der Kammer (6) durch Hineinblasen der Luft in den Turm (3), wobei eine erste Öffnung (9), die Luft aus der Kammer (6) in den Turm (3) hineinströmen lässt, und eine zweite Öffnung (10), die kühle Luft aus dem Turm (3) in die Kammer (6) hineinströmen lässt, in dem Boden der Kammer angeordnet sind, wobei die Luft an der Turmwand entlangströmt und die Wärme auf die Turmwand überträgt.

## Revendications

1. Éolienne comprenant un système de refroidissement
- dans laquelle une éolienne (1) comprend une nacelle (2) et une tour (3), et la nacelle (2) est agencée rotative au sommet de la tour (3),
- dans laquelle un composant (4) est agencé dans la nacelle (2) et le composant (4) émet de la chaleur en excès et un premier système de refroidissement (5) est couplé avec le composant (4) de manière à refroidir le composant (4) dans la nacelle (2),
- dans laquelle la tour (3) comprend une chambre (6) qui est agencée dans la partie supérieure de la tour (3), directement en-dessous de et en contact avec la nacelle (2),
- dans laquelle le toit (7) de la chambre (6) est la partie de fond de la nacelle (2) et le toit (7) de la chambre (6) est rotatif ensemble avec la nacelle (2) par rapport à la tour (3),
**caractérisée en ce que** le premier système de refroidissement (5) est connecté à la chambre (6) à travers le toit (7) de la chambre (6), de sorte que la chaleur provenant du premier système de refroidissement (5) est transférée à l'air dans la chambre (6),
- dans laquelle la chambre (6) est refroidie par un deuxième système de refroidissement (8),
- dans laquelle la chambre (6) comprend un sol et le deuxième système de refroidissement (8) comprend une connexion (9, 10) entre la chambre (6) et la tour (3) à travers le sol, dans laquelle une première ouverture (9) pour permettre à l'air provenant de la chambre (6) de s'écouler dans la tour (3) et une deuxième ouverture (10) pour permettre à l'air frais provenant de la tour (3) de s'écouler dans la chambre (6) sont agencées dans le sol de la chambre, pour guider l'air chaud provenant de la chambre (6) jusque dans la tour (3), de telle sorte que l'air chaud s'écoule le long de la paroi de la tour et est refroidi par la paroi de tour, de telle sorte que la tour (3) est utilisée comme un dissipateur thermique,
- de telle sorte que le transport de chaleur du premier système de refroidissement jusqu'à la tour est indépendant de la rotation ou de l'orientation de la nacelle (2) par rapport à la tour (3).

2. Éolienne selon la revendication 1, dans laquelle une conduite d'air (11) est connectée à la première ouverture (9) pour guider l'air chaud de la chambre vers le bas dans la tour (3), de telle sorte que l'air s'écoule le long de la paroi de tour vers le haut vers la chambre et refroidit au niveau de la paroi de tour.

3. Éolienne selon la revendication 1, dans laquelle une conduite d'air (11) est connectée à la deuxième ouverture (10), de telle sorte que l'air chaud s'écoule à travers la première ouverture (9) jusque dans la tour, s'écoule vers le bas le long de la paroi de tour et refroidit au niveau de la paroi de tour, et que l'air frais dans la tour est guidé jusque dans la chambre (6) à travers la conduite d'air (11) et la deuxième ouverture (10).

4. Éolienne selon l'une des revendications 1 ou 2, dans laquelle un ventilateur (12) est agencé au niveau d'une des ouvertures (9, 10) de telle sorte que l'air est déplacé à travers la tour (3).

5. Éolienne selon l'une des revendications 1 à 3, dans laquelle la conduite d'air (11) est un tuyau.

6. Éolienne selon la revendication 5, dans laquelle le tuyau est de plus de 20 mètres de long.

7. Éolienne selon l'une des revendications précédentes, dans laquelle le premier système de refroidissement (5) comprend un échangeur de chaleur (13) qui est agencé dans la chambre (6), pour transférer la chaleur du premier système de refroidissement (5) jusqu'à l'air dans la chambre (6).

8. Éolienne selon la revendication 7, dans laquelle un ventilateur (14) est agencé au niveau de l'échangeur de chaleur (13) pour transférer la chaleur du premier système de refroidissement jusqu'à l'air dans la chambre (6).

9. Éolienne selon l'une des revendications 1 à 4, dans laquelle l'air est utilisé comme un agent de refroidissement dans le premier système de refroidissement (5) .

10. Éolienne selon la revendication 9, dans laquelle le premier système de refroidissement (5) est connecté à la chambre (6) de telle manière que l'air chaud provenant du premier système de refroidissement (5) s'écoule jusque dans la chambre (6) à travers une ouverture (15) dans le toit (7) de la chambre (6) et l'air provenant de la chambre (6) s'écoule dans le premier système de refroidissement (5) de la nacelle (2) à travers une ouverture (16) dans le toit (7) de la chambre (6).

11. Éolienne selon l'une des revendications 9 ou 10, dans laquelle le premier système de refroidissement (5) comprend un ventilateur (17), de telle sorte que l'air provenant de la chambre (6) est déplacé à travers le premier système de refroidissement (5).

12. Éolienne selon l'une des revendications précédentes, dans laquelle le fond de la chambre (6) est la plate-forme d'orientation (18) de la tour (2).

13. Procédé pour refroidir un composant (4) dans la nacelle (2) d'une éolienne (1),
- dans lequel une éolienne (1) comprend une nacelle (2) et une tour (3), et la nacelle (2) est agencée rotative au sommet de la tour (3),
- dans lequel un composant (4) est agencé dans la nacelle (2) et le composant (4) émet de la chaleur en excès et un premier système de refroidissement (5) est couplé avec le composant (4) de manière à refroidir le composant (4) dans la nacelle (2),
- dans lequel la tour (3) comprend une chambre (6) qui est agencée dans la partie supérieure de la tour (3), directement en-dessous de et en contact avec la nacelle (2), de sorte que le toit (7) de la chambre (6) est la partie de fond de la nacelle (2) et que le toit (7) de la chambre (6) est rotatif ensemble avec la nacelle (2) par rapport à la tour (3),
comprenant les étapes de
- transfert de la chaleur du composant (4) dans la nacelle (2) jusque dans la chambre (6) par un premier système de refroidissement (5),
- refroidissement de l'air dans la chambre (6) en forçant l'air jusque dans la tour (3), dans lequel une première ouverture (9) pour permettre à l'air provenant de la chambre (6) de s'écouler dans la tour (3) et une deuxième ouverture (10) pour permettre à l'air frais provenant de la tour (3) de s'écouler dans la chambre (6) sont agencées dans le sol de la chambre, où l'air s'écoule le long de la paroi de tour et transfère la chaleur à la paroi de tour.
